# NEUE EUROPÄISCHE PATENTSCHRIFT

(11) **EP 0 175 843 B2**
(45) Veröffentlichungstag und Bekanntmachung des Hinweises auf die Entscheidung über den Einspruch: **20.04.1994**
(45) Hinweis auf die Patenterteilung: 13.12.1989
(21) Anmeldenummer: 85106786.8
(22) Anmeldetag: 01.06.1985
(51) Int. Cl.: B60R 16/02, B60T 17/18, B60T 8/00

(54) **Schutzschaltung gegen Unterspannungen im Bordnetz eines Kraftfahrzeuges**
Protective switching device against undervoltage in a motor vehicle electric circuit
Dispositif de commutation pour la protection contre les sous-tensions dans un circuit électrique de véhicule à moteur

(30) Priorität: 25.09.1984 DE 3435057
(43) Veröffentlichungstag der Anmeldung: 02.04.1986
(73) Patentinhaber: WABCO Westinghouse Fahrzeugbremsen GmbH, D-30453 Hannover (DE)
(72) Erfinder: Reinecke, Erich, D-3167 Burgdorf (DE); Ruhnau, Gerhard, D-3057 Neustadt 1 (DE)
(74) Vertreter: Schrödter, Manfred, Dipl.-Ing.

(56) Entgegenhaltungen:
- DE-A- 2 253 867
- DE-A- 2 853 351
- DE-A- 2 933 336
- DE-A- 3 136 944
- US-A- 4 013 324
- Tietze-Schenk, Halbleitertechnik, 5. Auflage, 1980, Springer-Verlag, Seiten 411-412

## Beschreibung

Die Erfindung bezieht sich auf eine Schutzschaltung gegen Unterspannungen im Bordnetz eines Kraftfahrzeuges gemäß dem Oberbegriff der Patentansprüch 1 und 3.

Die untere Grenze der Bordnetzspannung eines Kraftfahrzeuges hängt in erster Linie vom Ladezustand der Batterie und dem Lichtmaschinen-Ladestrom ab. Bei einem Bordnetz mit 24 Volt Nennspannung kann davon ausgegangen werden, daß nach einem Motorstart bei tiefentladener Batterie und nur geringem Batterieladestrom nach kurzer Ladezeit 20 Volt überschritten sind. Abzuziehen sind hiervon noch Spannungsabfälle auf Leitungen und Kontaktstellen, die jedoch im allgemeinen kleiner als 1 Volt sind.

Werden in Fahrzeugen mit tiefentladener Batterie sofort nach dem Motorstart Verbraucher mit relativ hohem Strombedarf, z. B. Heizungen, Gebläse, Scheinwerfer oder ein Antiblockiersystem eingeschaltet, und wird dabei der Strombedarf durch die Lichtmaschine nicht gedeckt, kann es zu nicht vorhersagbaren Unterspannungen kom men. Das gleiche geschieht auch bei geringem Strombedarf eines Verbrauchers, wenn sofort nach dem Start der Motor ausgestellt bzw. «abgewürgt» wird, und die Batterie den geringen Strombedarf aufgrund ihres schlechten Ladezustandes nicht befriedigen kann.

Aus diesen Gründen ist für die Elektronik eines Antiblockiersystems bei einem Bordnetz mit 24 Volt ein unterer Versorgungsspannungs-Wert von 20 Volt zu spezifizieren. Bei den Magnetventilen zur Bremsdruck-Steuerung, die von den Elektronik-Endstufen angesteuert werden, sind als untere Spannung 18 Volt zu spezifizieren, damit trotz des Spannungsabfalls an den Endstufen auch bei schwachem Bordnetz noch eine einwandfreie Funktion sichergestellt ist.

Falls die obengenannte untere Spannungsgrenze von 20 Volt im Bordnetz des Kraftfahrzeugs unterschritten wird, kann ein einwandfreies Arbeiten eines Antiblockiersystems nicht mehr garantiert werden. Es ist bekannt, in diesem Fall das Antiblockiersystem abzuschalten (DE-A-22 53 867). Nachteilig an dieser Lösung ist aber, daß damit die Wirkung des Blockierschutzes aufhört. Falls die Abschaltung während einer gere- gelten Bremsung erfolgt, blockieren schlagartig alle Räder, da in einem solchen Fall automatisch die normale Bremswirkung einsetzt.

Ein weiterer Nachteil der bekannten Lösung besteht darin, daß in hochohmigen Bordnetzen die Spannung nach dem Abschalten des Anti- blockiersystems wieder über die Abschaltschwelle steigen kann. Wenn dadurch das Antiblockiersystem sofort wieder eingeschaltet wird, kann es zu Schwingungsvorgängen, d. h. ständigem Ein- und Ausschalten des Systems, kommen. Um dies zu vermeiden, ist es denkbar, die Wiedereinschaltung erst bei einer über der Abschaltschwelle liegenden Spannung zuzulassen, also eine Hyste- rese vorzusehen.

Der Erfindung liegt die Aufgabe zugrunde, eine Schutzschaltung der eingangs genannten Art anzugeben, welche die obengenannten Nachteile nicht aufweist und welche bei einem leichten Absinken der Bordnetzspannung ein einge- schränktes Arbeiten des Antiblockiersystems noch zuläßt.

Diese Aufgabe wird durch die in den Patentansprüchen 1 und 3 enthaltene Erfindung gelöst. Die Unteransprüche enthalten zweckmäßige Weiterbildungen der Erfindung.

Die Erfindung wird im folgenden anhand einer Zeichnung näher erläutert. Diese zeigt in
Fig. 1 eine erste Variante, und in
Fig. 2 eine zweite Variante der erfindungsgemäßen Schutzschaltung.

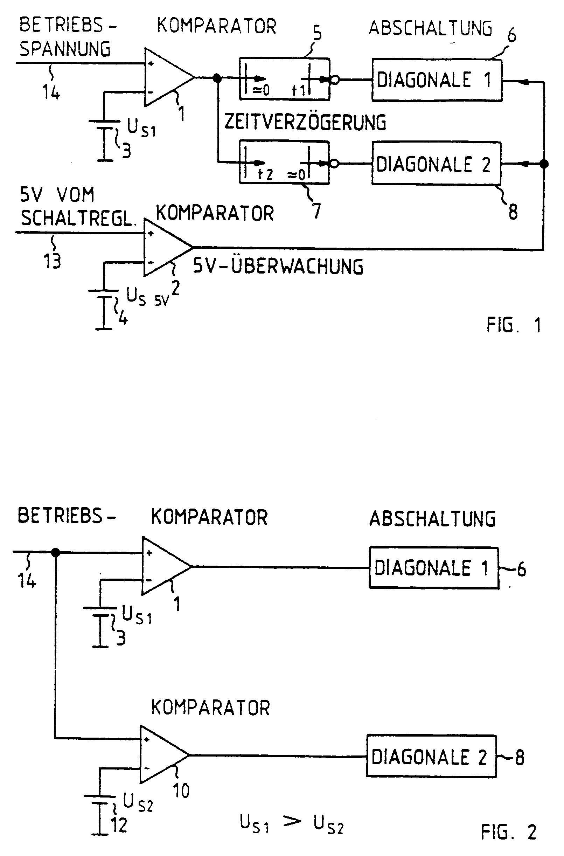

In dem schematischen Blockschaltbild nach der Fig. 1 sind mit 6 und 8 die erste und die zweite Diagonale eines Antiblockiersystems dargestellt. Ein solches, aus Sicherheitsgründen in zwei Diagonalen aufgeteiltes Antiblockiersystem ist aus der DE-A-29 33 336 bekannt.

Die auf einer Leitung 14 anstehende Betriebsspannung des Bordnetzes wird in einem Komparator 1 mit einer ersten Spannungsschwelle U_{S1} verglichen. Diese Schwelle wird hier symbolisch durch eine Batterie 3 dargestellt, wird aber vorzugsweise als stabile Referenzspannung aus dem Bordnetz erzeugt. Dies gilt auch für die übrigen, in den Fig. 1 und 2 dargestellten Batterien.

Dem Komparator 1 sind zwei parallel liegende Zeitglieder 5, 7 nachgeschaltet. Das erste Zeitglied 5 bewirkt eine nahezu unverzögerte Abschaltung der ersten Diagonalen 6 bei Unterschreitung der Spannungsschwelle U_{S1}. Falls die Betriebsspannung wieder über die genannte Schwelle ansteigt, wird die Abschaltung mit einer Zeitverzögerung t₁ wieder aufgehoben.

Durch das zweite Zeitglied 7 wird bei Unterschreitung der ersten Spannungsschwelle U_{S1} die zweite Diagonale 8 nicht sofort, sondern erst nach einer Verzögerungszeit von t₂ abgeschaltet. Die Wiedereinschaltung erfolgt nahezu unverzögert. Die genannten Zeitverzögerungen haben einen ungefähren Wert von t₁ = 50 ms und t₂ = 5 sec.

Zusätzlich zur Betriebsspannung des Bordnetzes wird noch die interne Versorgungsspannung der Blockierschutz-Elektronik überwacht. Diese beträgt, insbesondere wenn die Elektronik einen Mikrocomputer enthält, etwa 5 Volt. Diese Spannung wird durch einen Spannungsregler bzw. Schaltregler aus der Betriebsspannung (Bordnetz) erzeugt. Die interne Spannung auf der Leitung 13 wird mit einer Spannungsschwelle U_{S5V} aus einer symbolischen Batterie 4 in einem zusätzlichen Komparator 2 verglichen. Falls die Batteriespannung von 5 Volt nicht mehr erreicht wird, werden beide Diagonalen 6 und 8 sofort abgeschaltet.

Die beschriebene, in Fig. 1 schematisch dargestellte Schutzschaltung mit nur einer Spannungsschwelle (U_{S1}) für die Betriebsspannung und mit Zeitverzögerungen hat zwar den Nachteil, daß nach dem Anlassen des Motors durch den hierbei erzeugten Spannungseinbruch die erste Diagonale 6 ausgeschaltet ist. Da das Fahrzeug dabei steht, ist dieser Nachteil aber nicht schwerwiegend.

Wahlweise kann das erste Zeitglied 5 zusätzlich auch mit einer Einschaltverzögerung ausgerüstet werden. Hierdurch wird vermieden, daß bei kurzzeitigen Spannungseinbrüchen eine unnötige Abschaltung der ersten Diagonalen 6 erfolgt. Da die Zeitverzögerung vom Mikrocomputer durchgeführt werden kann, ergibt sich nur ein geringfügig größerer Aufwand.

In Fig. 2 ist eine zweite Variante der Schutzschaltung schematisch dargestellt. Diese arbeitet mit zwei Spannungsschwellen für die auf der Leitung 14 anstehende Betriebsspannung. Die erste Spannungsschwelle U_{S1} wird durch eine Batterie 3 erzeugt, während die zweite Spannungsschwelle U_{S2} von einer Batterie 12 erzeugt wird. Hierbei liegt die erste Spannungsschwelle höher als die zweite Spannungsschwelle, es gilt also U_{S1} größer als U_{S2}. Ein Absinken der Betriebsspannung unter die erste Spannungsschwelle wird von einem Komparator 1 erkannt. Dieser bewirkt daraufhin die Abschaltung der ersten Diagonalen 6. In diesem Zustand kann das Fahrzeug noch geregelt gebremst werden, wobei dann nur die zweite Diagonale 8 arbeitet.

Sollte jedoch die Betriebsspannung im Bordnetz auch unter die zweite Spannungsschwelle U_{S2} absinken, wird von einem zweiten Komparator 10 auch die zweite Diagonale 8 abgeschaltet.

Die zuerst abgeschaltete erste Diagonale 6 besteht vorzugsweise aus dem linken Vorderrad und dem rechten Hinterrad. Hierdurch wird gewährleistet, daß für den im allgemeinen rutschigen rechten Straßenrand ein geregeltes rechtes Vorderrad zur Verfügung steht. Bei Fahrzeugen, die in Ländern mit Linksverkehr fahren, wird sinngemäß die andere Diagonale zuerst abgeschaltet.

Bei Antiblockiersystemen, die nicht in zwei getrennte Diagonalen aufgeteilt sind, kann die Erfindung sinngemäß auch angewendet werden, wenn statt der Aufteilung in Diagonalen eine Aufteilung in Achsen erfolgt. Hierbei wird man, um die Stabilität des Fahrzeugs zu erhalten, zuerst die Vorderachs-Regelung abschalten.

## Patentansprüche

1. Schutzschaltung gegen Unterspannungen im Bordnetz eines Kraftfahrzeuges, das mit einem Antiblockiersystem ausgerüstet ist, das in für sich funktionsfähige Teilsysteme (6, 8) aufgeteilt ist, die jeweils auf einen Teil der Räder des Kraftfahrzeuges wirken, gekennzeichnet durch folgende Merkmale:
a) es ist ein Spannungs-Komparator (1) zur Erkennung eines Spannungs-Abfalls im Bordnetz unter eine erste Schwelle (U_{S1}) vorgesehen,
b) es ist eine durch den Komparator (1) angesteuerte Abschalteinrichtung vorgesehen, die bei Unterschreitung der ersten Schwelle (U_{S1}) eine getrennte Abschaltung eines Teilsystems (6) des Antiblockiersystems bewirkt,
c) dem Komparator (1) ist ein erstes Zeitglied (5) nachgeschaltet, welches beim Ansprechen des Komparators (1) eine Abschaltung des Teilsystems (6) nahezu unverzögert bewirkt und beim Abfallen des Komparators (1) die Abschaltung verzögert wieder aufhebt,
d) dem Komparator (1) ist ein zweites Zeitglied (7) nachgeschaltet, welches beim Ansprechen des Komparators (1) eine Abschaltung eines zweiten Teilsystems (8) verzögert bewirkt und beim Abfall des Komparators (1) die Abschaltung nahezu unverzögert wieder aufhebt.

2. Schutzschaltung nach Anspruch 1, dadurch gekennzeichnet, daß ein zusätzlicher Komparator (2) vorgesehen ist, welcher die interne Betriebsspannung des Antiblockiersystems auf einer Leitung (13) überwacht und bei Unterschreitung einer zusätzlichen Schwelle (U_{S5V}) die Abschaltung der Teilsysteme (6, 8) unverzögert bewirkt.

3. Schutzschaltung gegen Unterspannungen im Bordnetz eines Kraftfahrzeuges, das mit einem Antiblockiersystem ausgerüstet ist, das in für sich funktionsfähige Teilsysteme (6, 8) aufgeteilt ist, die jeweils auf einen Teil der Räder des Kraftfahrzeuges wirken, gekennzeichnet durch folgende Merkmale:
a) es ist ein Spannungs-Komparator (1) zur Erkennung eines Spannungs-Abfalls im Bordnetz unter eine erste Schwelle (U_{S1}) vorgesehen,
b) es ist eine durch den Komparator (1) angesteuerte Abschalteinrichtung vorgesehen, die bei Unterschreitung der ersten Schwelle (U_{S1}) eine getrennte Abschaltung eines Teilsystems (6) des Antiblockiersystems bewirkt,
c) der Spannungs-Komparator (1) bewirkt die Abschaltung und Wiedereinschaltung des Teilsystems (6) beim Durchlaufen einer ersten Schwelle (U_{S1}) unverzögert.
d) es ist ein zweiter Komparator (10) vorgesehen, der die Abschaltung und Wiedereinschaltung eines zweiten Teilsystems (8) beim Durchlaufen einer zweiten Schwelle (U_{S2}) unverzögert bewirkt, wobei die zweite Schwelle (U_{S2}) unter der ersten Schwelle (U_{S1}) liegt.

4. Schutzschaltung nach einem der Ansprüche 1 bis 3, dadurch gekennzeichnet, daß die Teilsysteme (6, 8) jeweils auf die Räder einer Diagonalen wirken.

5. Schutzschaltung nach Anspruch 4, dadurch gekennzeichnet, daß das Teilsystem (6) für die zuerst abgeschaltete Diagonale zum linken Vorderrad und zum rechten Hinterrad des Kraftfahrzeuges gehört.

6. Schutzschaltung nach einem der Ansprüche 1 bis 3, dadurch gekennzeichnet, daß die Teilsysteme (6, 8) jeweils auf die Räder einer Achse wirken.

## Claims

1. Protection circuit against undervoltages in the electrical system of a motor vehicle equipped with an anti-lock system that is divided into sub-systems (6, 8) capable of independent operation, each of which subsystems acts on some of the wheels of the motor vehicle, characterised by the following features:
a) a voltage comparator (1) is provided for identifying a voltage drop in the electrical system below a first threshold (U_{S1}),
b) a switch-off device controlled by the comparator (1) is provided which effects separate switching off of a sub-system (6) of the anti-lock system when the first threshold (U_{S1}) is passed,
c) downstream of the comparator (1) there is arranged a first timer (5) which on actuation of the comparator (1) switches off the sub-system (6) almost without a delay and when the comparator (1) drops cancels the switching off again after a delay,
d) downstream of the comparator (1) there is arranged a second timer (7) which on actuation of the comparator (1) switches off a second sub-system (8) after a delay and when the comparator (1) drops cancels the switching off again almost without a delay.

2. Protection circuit according to claim 1, characterised in that there is provided an additional comparator (2) which monitors the internal operating voltage of the anti-lock system on a line (13) and when an additional threshold (U_{S5V}) is passed switches off the sub-systems (6, 8) without a delay.

3. Protection circuit against undervoltages in the electrical system of a motor vehicle equipped with an anti-lock system that is divided into sub-systems (6, 8) capable of independent operation, each of which subsystems acts on some of the wheels of the motor vehicle, characterised by the following features:
a) a voltage comparator (1) is provided for identifying a voltage drop in the electrical system below a first threshold (U_{S1}),
b) a switch-off device controlled by the comparator (1) is provided which effects separate switching off of a sub-system (6) of the anti-lock system when the first threshold (U_{S1}) is passed,
c) the voltage comparator (1) effects the switching off and switching on again of the sub-system (6) without a delay when a first threshold (U_{S1}) is passed through,
d) there is provided a second comparator (10) which effects the switching off and switching on again of a second sub-system (8) without a delay when a second threshold (U_{S2}) is passed through, the second threshold (U_{S2}) being below the first threshold (U_{S1}).

4. Protection circuit according to any one of claims 1 to 3, characterised in that the sub-systems (6, 8) each act on the wheels of a diagonal.

5. Protection circuit according to claim 4, characterised in that the sub-system (6) for the diagonal switched off first is associated with the left-hand front wheel and with the right-hand rear wheel of the motor vehicle.

6. Protection circuit according to any one of claims 1 to 3, characterised in that the sub-systems (6, 8) each act on the wheels of one axle.

## Revendications

1. Circuit de protection contre les sous-tensions dans le réseau de bord d'un véhicule automobile équipé d'un système antiblocage partagé en systèmes partiels (6, 8) capables d'opérer chacun de manière autonome, agissant chacun sur une partie des roues du véhicule automobile, caractérisé par les caractéristiques suivantes :
a) il est prévu un comparateur de tension (1) pour identifier une chute de la tension dans le réseau de bord en dessous d'un premier seuil (U_{S1}),
b) il est prévu un dispositif de mise hors circuit qui est commandé par le comparateur (1) et qui, en cas de passage en dessous du premier seuil (U_{S1}), provoque une mise hors circuit séparée d'un système partiel (6) du système antiblocage,
c) le comparateur (1) est suivi d'un premier élément temporisateur (5) qui, lors de la réponse du comparateur (1), provoque une mise hors circuit presque non retardée du système partiel (6) et qui, en cas de retombée du comparateur (1), supprime avec retardement la mise hors circuit,
d) le comparateur (1) est suivi d'un second élément temporisateur (7) qui, lors de la réponse du comparateur (1), provoque une mise hors circuit retardée d'un second système partiel (8) et qui, en cas de retombée du comparateur (1), supprime de manière presque non retardée la mise hors circuit.

2. Circuit de protection selon la revendication 1, caractérisé par le fait qu'il est prévu un comparateur supplémentaire (2) qui surveille la tension de fonctionnement interne du système antiblocage sur une ligne (13) et qui, en cas de passage en dessous d'un seuil supplémentaire (U_{S5V}), provoque sans retard la mise hors cirucit des systèmes partiels (6, 8).

3. Circuit de protection contre les sous-tensions dans le réseau de bord d'un véhicule automobile équipé d'un système antiblocage partagé en systèmes partiels (6, 8) capables d'opérer chacun de manière autonome, agissant chacun sur une partie des roues du véhicule automobile, caractérisé par les caractéristiques suivantes :
a) il est prévu un comparateur de tension (1) pour identifier une chute de la tension dans le réseau de bord en dessous d'un premier seuil (U_{S1}),
b) il est prévu un dispositif de mise hors circuit qui est commandé par le comparateur (1) et qui, en cas de passage en dessous du premier seuil (U_{S1}), provoque une mise hors circuit séparée d'un système partiel (6) du système antiblocage,
c) le comparateur de tension (1) provoque sans retard la mise hors circuit et la remise en circuit du système partiel (6) lors du franchissement d'un premier seuil (U_{S1}),
d) il est prévu un deuxième comparateur (10) qui provoque sans retard la mise hors circuit et la remise en circuit d'un second système partiel (8) lors du franchissement d'un deuxième seuil (U_{S2}), le deuxième seuil (U_{S2}) étant inférieur au premier seuil (U_{S1}).

4. Circuit de protection selon l'une des revendications 1 à 3, caractérisé en ce que les systèmes partiels (6, 8) agissent chacun sur les roues d'une diagonale.

5. Circuit de protection selon la revendication 4, caractérisé par le fait que le système partiel (6) relatif à la diagonale mise hors circuit la première se rapporte à la roue avant gauche et à la roue arrière droite du véhicule automobile.

6. Circuit de protection selon l'une des revendication 1 à 3, caractérisé en ce que les systèmes partiels (6, 8) agissent chacun sur les roues d'un essieu.
